# FASCICULE DE BREVET EUROPEEN

(11) **EP 2 591 269 B1**
(45) Date de publication et mention de la délivrance du brevet: **03.08.2016**
(21) Numéro de dépôt: 11748437.8
(22) Date de dépôt: 06.07.2011
(51) Int. Cl.: F16L 41/06, F16L 47/34

(54) **COLLIER DE DÉRIVATION POUR UNE CANALISATION DE FLUIDE, EAU OU GAZ PAR EXEMPLE**
ABZWEIGUNGSSATTEL EINER FLUIDFÜHRENDEN ROHRLEITUNG, ZUM BEISPIEL WASSER ODER GAS.
TAPPING COLLAR FOR A PIPE CARRYING FLUID, FOR EXAMPLE WATER OR GAS

(30) Priorité: 07.07.2010 FR 1002857
(43) Date de publication de la demande: 15.05.2013
(73) Titulaire: Etablissements Saint Germain Et Straub, 80210 Feuquieres-en-vimeu (FR)
(72) Inventeur: HELLE, Jacky, F-80210 Feuquieres en Vimeu (FR)
(74) Mandataire: Boubal, Denis Henri Jacques
(86) Numéro de dépôt international: PCT/FR2011/000398
(87) Numéro de publication internationale: WO 2012/004475

(56) Documents cités:
- CH-A5- 608 872
- DE-A1- 2 431 741
- GB-A- 2 304 164
- US-A- 3 272 534
- US-A- 4 638 834

## Description

L'invention concerne un collier de dérivation pour une canalisation de fluide, eau ou gaz par exemple.

De tels colliers de dérivation sont connus de l'état de la technique et sont traditionnellement constitués d'une selle rigide destinée à être appliquée de manière étanche, via un joint sur la canalisation, en regard d'un orifice de piquage, et d'une bride souple (ou bracelet) pour le serrage de la selle sur la canalisation.

De manière connue, la bride, constituée généralement à partir d'un feuillard métallique est souple et est assujettie à la selle, pièce rigide, de fonderie notamment, voire de décolletage, par l'intermédiaire de moyens de fixation latéraux à ladite selle. Ces moyens de fixation comportent des moyens de vissage pour serrer le collier, à savoir l'ensemble bride/selle sur la canalisation.

De tels colliers sont, par exemple, connus des documents FR-2.809.471, GB 2 304 164, WO 99/32823 ou encore FR-2.933.764. Il s'agit de colliers dont la longueur de bride effective peut être réglée pour pouvoir être montés sur des canalisations de différents diamètres.

Dans les colliers des documents précités, ou encore d'autres colliers de dérivation à la connaissance du demandeur, l'inventeur a toutefois constaté que ces colliers provoquaient une ovalisation préjudiciable des canalisations semi-rigides, en particulier plastiques, sur lesquelles ils étaient montés.

Selon les observations de l'inventeur, l'utilisation des colliers de prise de l'état de la technique crée une discontinuité importante dans le cerclage des tuyaux semi-rigides, en particulier entre la selle et la bride des colliers et serait responsable de cette ovalisation.

De plus, les selles de dérivation connues sont bien souvent des pièces de fonderie dont le prix de revient est élevé. Leur mise en place est par ailleurs compliquée.

Le but de la présente invention est de pallier les inconvénients précités en proposant un collier de dérivation respectant l'intégrité de la conduite semi-rigide sur laquelle il est destiné à être monté.

Un autre but de l'invention est de proposer un collier qui s'adapte à plusieurs diamètres de conduits souples ou rigides.

Un autre but de l'invention est de proposer un collier de pose aisé.

Un autre but de l'invention est de proposer un collier de dérivation qui peut être fabriqué à moindre coût.

D'autres buts et avantages de la présente invention apparaîtront au cours de la description qui va suivre qui n'est donnée qu'à titre indicatif et qui n'a pas pour but de la limiter.

L'invention concerne un collier de dérivation pour une canalisation de fluide comprenant :
- une selle destinée à être appliquée de manière étanche sur ladite canalisation, via un joint, présentant une ouverture destinée à être disposée en regard d'un orifice de piquage de ladite canalisation,
- des moyens de serrage de la selle sur ladite canalisation comprenant au moins une bride souple, destinée à coopérer avec la selle pour ceinturer la canalisation,
- un raccord de branchement, tubulaire, selon une première alternative ou un robinet, selon une seconde alternative
- ladite selle et ladite bride sont agencées de telle sorte à ceinturer ledit collier sur ladite canalisation, sans discontinuité de contact du collier avec la circonférence de la canalisation entre ladite selle et la bride, ou à tout le moins de limiter la discontinuité de contact (d) entre ladite selle et la bride souple, inférieure ou égale à 5 mm.

Selon l'invention, ladite selle et la bride souple sont constituées par un élément monobloc, souple, sous forme d'une bande, obtenu à partir d'une feuille de matériau, métallique, et ladite ouverture de la selle est définie par une collerette de la feuille de matériau, circulaire, tournée vers l'extérieur du collier, le raccord de branchement, tubulaire, selon la première alternative ou encore directement le robinet selon la seconde alternative étant assujetti à ladite collerette par soudure ou sertissage, le raccord de branchement, pièce rigide métallique, présentant un bord circulaire introduit au jeu d'emboîtement près dans la collerette circulaire, assujetti par soudure ou sertissage à ladite collerette.

Selon des caractéristiques optionnelles, prises seules ou en combinaison :
- le raccord de branchement est assujetti à ladite collerette par soudure ou sertissage ;
- le raccord de branchement présente un taraudage destiné pour le branchement par vissage d'un obturateur, ou d'un robinet de dérivation, ou encore d'une conduite de dérivation ;
- le collier de dérivation est multidiamètre, présentant des moyens de réglage de la longueur effective de ladite bride souple ;
- lesdits moyens de serrage comprennent, outre la bride souple, des moyens de vissage coopérant avec la bride pour contraindre ledit collier au serrage, comprenant par exemple au moins une vis et un écrou ou encore une tige filetée et deux écrous ;
- lesdits moyens de réglage de la longueur effective de ladite bride souple comprennent une pluralité d'ouvertures de réglage réparties sur la longueur de ladite bride souple et destinées pour le réglage de la position des moyens de vissage ;
- ladite bride souple présente des butées en saillie destinées à engager avec un écrou des moyens de vissage afin d'interdire la rotation dudit écrou par rapport à ladite bride souple lors du serrage par vissage ;
- les butées sont réalisées par des embossages de la bride souple ;
- les moyens de serrage présentent un corps présentant un alésage traversé par lesdits moyens de vissage, ledit corps étant muni de moyens d'accrochage destinés à coopérer avec une zone de réception de la bride souple pour accrocher de manière amovible ladite bride souple, ou alternativement ;
- les moyens de serrage présentent un corps cylindrique sur lequel est enroulée et assujettie une partie de ladite bride souple, présentant un alésage traversé par lesdits moyens de vissage ;
- le joint peut présenter un corps tubulaire destiné à être introduit au jeu d'emboîtement prés dans l'ouverture de ladite selle, présentant une lèvre circulaire, de diamètre supérieur audit corps tubulaire dudit joint, destinée à être pincée pour assurer l'étanchéité entre le siège et ladite canalisation.

L'invention trouve une utilisation particulière pour brancher une canalisation de dérivation sur une canalisation, en particulier semi rigide, en charge ou non.

L'invention sera mieux comprise à la lecture de la description accompagnée des dessins en annexe parmi lesquels :
- la figure 1 est une vue, selon un plan de coupe sensiblement perpendiculaire à l'axe de la canalisation, illustrant le collier de dérivation, et un robinet de dérivation, non assujetti au collier, destiné à être branché sur le collier,
- la figure 2 est une vue de détail, en perspective, illustrant plus particulièrement la selle et la bride, selon un exemple de réalisation de l'invention pour lequel la selle et ladite bride souple sont constituées par un élément monobloc, sous forme d'une bande,
- la figure 3 est une vue en perspective du collier, selon l'invention, monté sur une canalisation de fluide, le collier étant pourvu du robinet de dérivation,
- la figure 4 est une vue de coupe d'un collier conforme à l'invention selon un second mode de réalisation pour lequel un robinet est assujetti directement, notamment par soudure, à la collerette du siège,
- la figure 5 est une vue de coupe d'un collier ne faisant pas partie de l'invention pour lequel le siège et la bride sont constitués par deux éléments distincts,
- les figures 6a, 6b, 6c, 6d, 6e et 6f sont différentes vues, respectivement une vue selon la coupe VI-VI de la figure 6e, une vue en perspective, une vue de face, une vue de côté, une vue de dessus, et une vue de dessous d'un joint souple destiné à assurer l'étanchéité entre le siège et la canalisation,
- la figure 7 est une vue, illustrant le collier de dérivation, et un robinet de dérivation, non assujetti au collier, destiné à être branché sur le collier, selon un quatrième mode de réalisation dudit collier,
- les figures 8 et 9 sont respectivement des vues de côté et de dessus de la bride souple du collier tel qu'illustré à la figure 7,
- la figure 10 est une vue illustrant le collier de dérivation, non assujetti au collier, destiné à être branché sur le collier, selon un cinquième mode de réalisation dudit collier,
- la figure 11 est une vue de dessus du collier de la figure 10.

Aussi, l'invention concerne un collier 1 de dérivation pour une canalisation de fluide 2 comprenant :
- une selle 3, destinée à être appliquée de manière étanche sur ladite canalisation, via un joint 4, présentant une ouverture 7 destinée à être disposée en regard d'un orifice de piquage de ladite canalisation,
- des moyens de serrage 5, 6 de la selle sur ladite canalisation comprenant au moins une bride souple 5 destinée à coopérer avec la selle 3 pour ceinturer la canalisation.

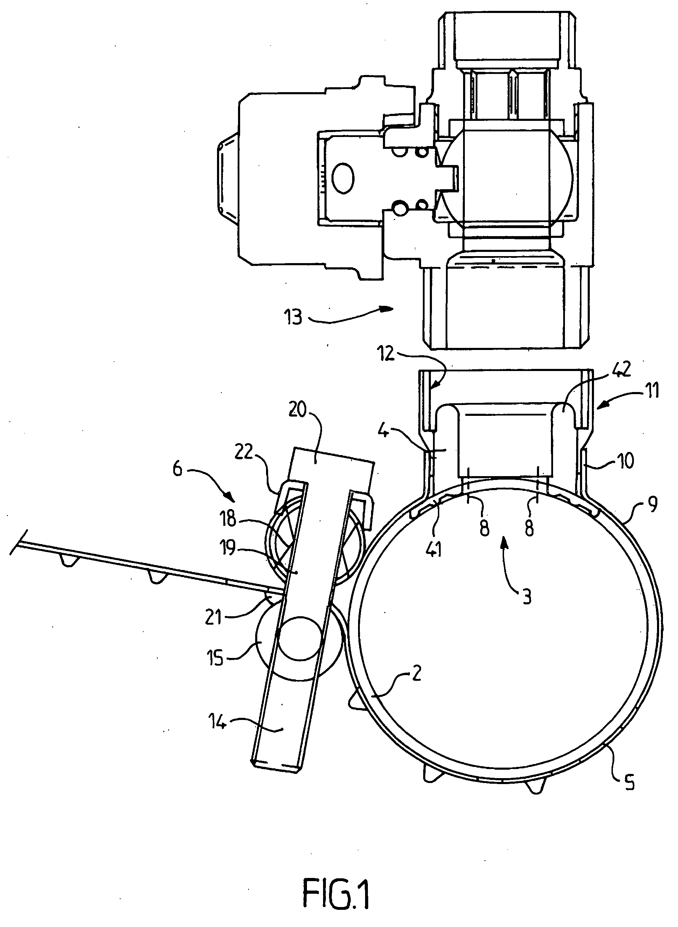

A la figure 1, l'ouverture de piquage n'est pas matérialisée mais repérée par des pointillés.

Par selle, on entend la partie du collier qui comprend l'ouverture 7 destinée à être appliquée de manière étanche sur ladite canalisation via le joint 4.

Ce collier 1 peut ainsi être monté sur une canalisation en charge ou non. Une fois le collier monté, une machine à percer, équipée d'un outil de perçage, tel qu'un foret, peut être assujetti au collier 1, notamment fixé à un robinet 13 d'obturation, et permettre ainsi le perçage de la canalisation et ainsi la création de l'orifice de piquage 8. Une fois percé, le robinet peut être fermé.

Selon la présente invention, ladite selle 3 et ladite bride souple 5 sont agencées de telle sorte à ceinturer ledit collier 1 sur ladite canalisation 2, sans discontinuité de contact du collier 1 avec la circonférence de la canalisation entre ladite selle 3 et la bride souple 5, ou à tout le moins de limiter la discontinuité de contact (d) entre ladite selle 3 et la bride souple 5, inférieure ou égale à 5 mm.

Tel qu'illustré selon les exemples de réalisation, le collier de dérivation 1 permet d'encercler la canalisation de manière continue sur la quasi-totalité de la circonférence de la conduite 2, en exerçant une force de serrage homogènement répartie sur la circonférence de la conduite 2.

On limite ainsi les risques d'ovalisation des conduites semi-rigides, plastiques notamment. Il est à noter toutefois que le collier 1, conforme à l'invention, peut être également utilisé pour des canalisations rigides, en fonte notamment.

La selle 3 est réalisée à partir d'une feuille de matériau, déformable, notamment un métal, tel que l'acier inoxydable, destinée à épouser le rayon de courbure de ladite canalisation lors du serrage. La feuille de matériau de la selle 3 présente ladite ouverture 7 destinée à être positionnée en regard dudit orifice de piquage 8 de ladite canalisation 2.

Cette selle 3 permet ainsi, et contrairement aux selles de l'état de la technique, d'adapter son rayon de courbure en fonction du diamètre de la canalisation, et ainsi de limiter encore plus une ovalisation de la conduite.

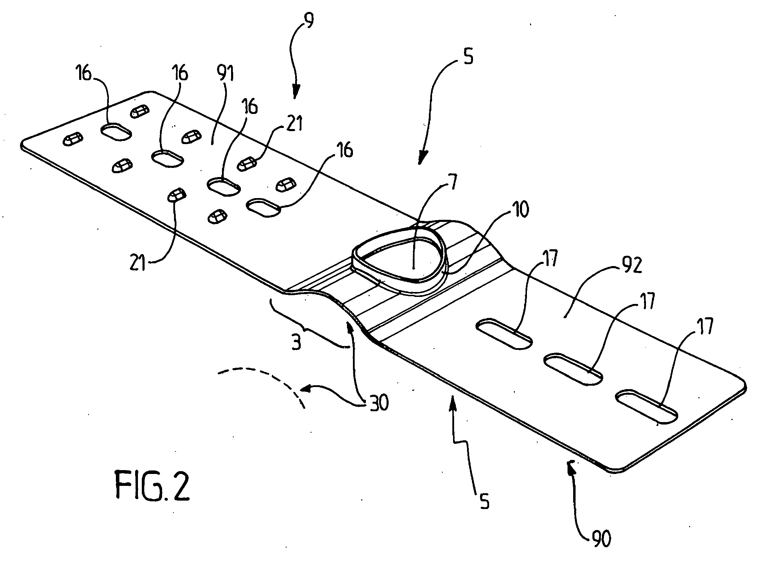

Avantageusement et selon un mode de réalisation illustré aux figures 1 à 4, la selle 3 et la bride souple 5 peuvent être constituées par un même élément monobloc 9, souple, obtenu à partir d'une feuille métallique. Cet élément 9 peut prendre la forme d'une bande telle qu'illustrée selon les exemples. La selle 3 est matérialisée sur une partie médiane de la bande, selon la figure 2.

Autrement dit, la selle 3 constitue la partie médiane de la bande 90 prolongée de part et d'autre de deux parties extrêmes 91, 92 pour former un collier monobloc déformable.

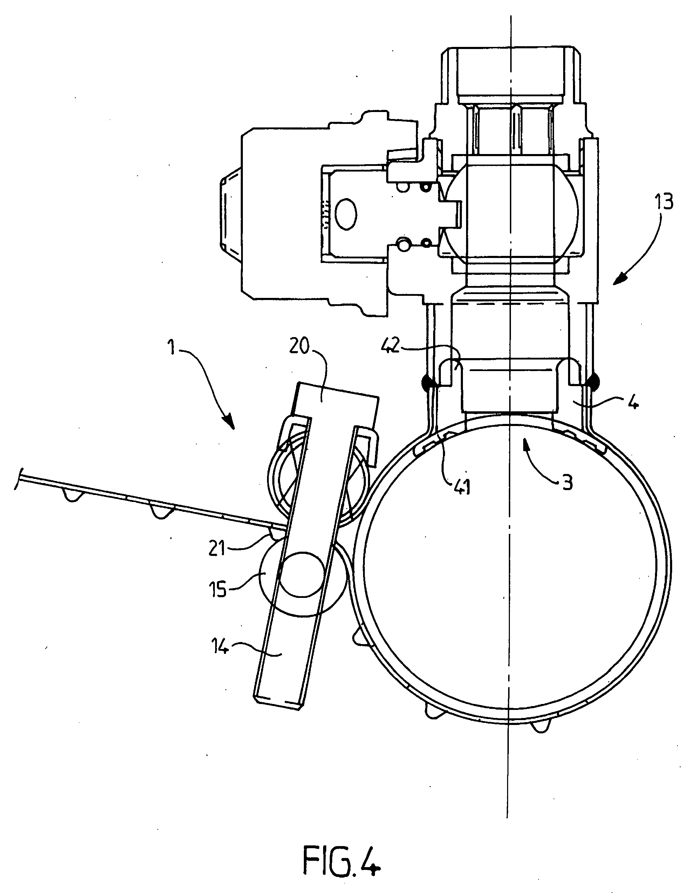

L'ouverture 7 de la selle 3 peut être définie par une collerette 10 de la feuille métallique, circulaire, tournée vers l'extérieur du collier 1. Cette collerette permet d'assujettir un raccord de branchement 11, tubulaire (figure 1) ou encore directement, un robinet d'obturation (figure 4).

Selon l'exemple, cette collerette 10 est monobloc avec la bride 5. Elle peut toutefois être constituée par un élément distinct obtenu par emboutissage notamment.

Le raccord de branchement 11 est une pièce rigide, notamment métallique, présentant un bord circulaire destiné à être assujetti avec la collerette 10. Ce bord circulaire est notamment, tel qu'illustré à la figure 1, destiné à être introduit, au jeu d'emboîtement près, dans ladite collerette circulaire 10. La pièce de branchement 11 et la collerette 10 peuvent être assujetties par soudage, sertissage, collage ou tout autre moyen.

Le raccord de branchement 11 peut présenter, sur sa partie supérieure tubulaire, un taraudage 12 destiné pour le branchement par vissage d'un obturateur, d'un robinet de dérivation 13, tel que cela est illustré notamment à la figure 1 ou encore d'une conduite de dérivation.

Tel qu'illustré à la figure 1, le joint 4 est introduit au travers de l'ouverture 7 et présente une lèvre circulaire 41 destinée à assurer l'étanchéité entre la selle 3 et la conduite 2.

Le joint 4 peut présenter un corps tubulaire destiné à être introduit au jeu d'emboîtement prés dans l'ouverture 7 de ladite selle 3, présentant ladite lèvre circulaire 41, de diamètre supérieur audit corps tubulaire, destinée à être pincée pour assurer l'étanchéité entre le siège 3 et ladite canalisation 2.

Le joint 4 peut présenter sur le diamètre interne du corps tubulaire, un élément de renfort 44, rigide, notamment métallique destiné à éviter que ledit joint 4 ne flambe lors du serrage. Cet élément de renfort 44 permet également d'éviter la détérioration du joint lors des opérations de perçage de la conduite.

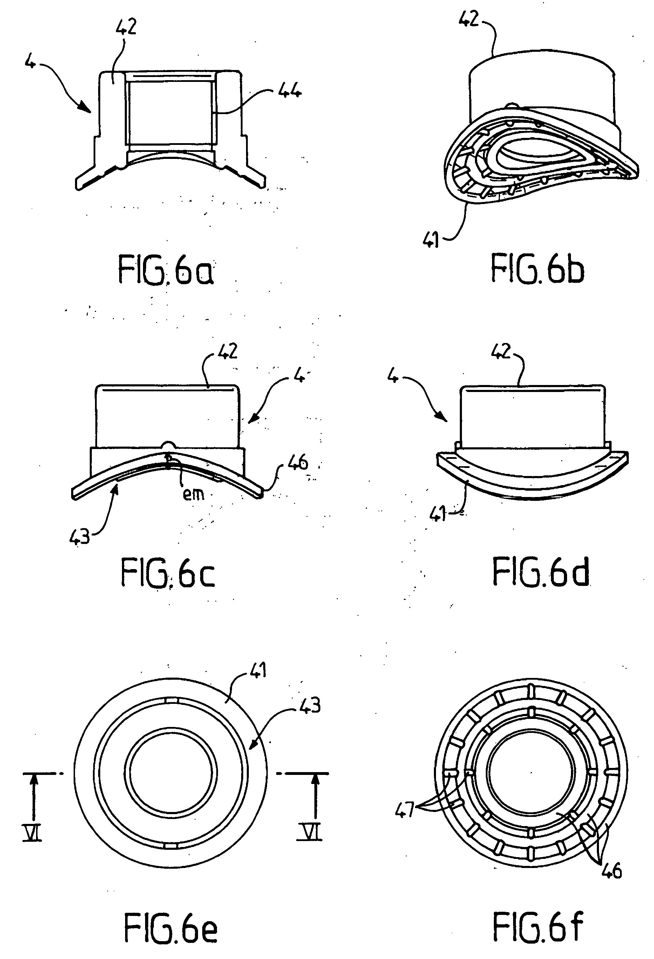

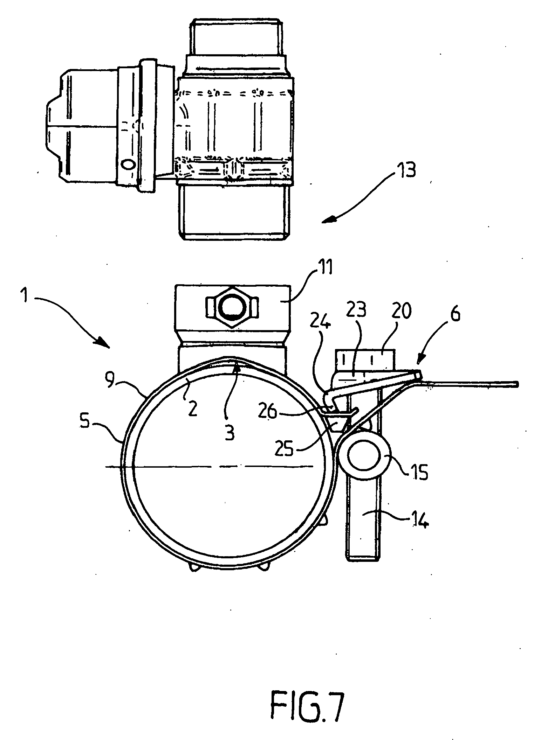

Selon l'exemple de la figure 1 ou encore selon les vues de détails des figures 6a à 6e, le joint 4 peut présenter un bord circulaire 42, à une extrémité du corps tubulaire, qui permet d'assurer l'étanchéité avec une pièce, tel que le robinet 13 destiné à être vissé au raccord de branchement 11 (voir figure 1), ou encore d'assurer l'étanchéité avec le bord inférieur du robinet 13 (voir figure 4 ou 7) lorsque le collier est en position de serrage sur la canalisation 2. A l'autre extrémité du corps tubulaire est prévue ladite lèvre circulaire 41.

La lèvre circulaire 41 peut présenter une surface de contact 43, concave (figure 6.c), destinée à épouser le rayon de courbure de la canalisation. L'épaisseur de la lèvre circulaire 41 peut être non constante sur le pourtour de ladite lèvre, présentant une épaisseur maximal « em » selon un diamètre de ladite lèvre circulaire.

La surface de contact du joint 4 avec la conduite 2 peut présenter, telle qu'illustrée à la figure 6f, des nervures circulaires 46, concentriques. Ces nervures circulaires 46 peuvent être complétées par des nervures radiales 47.

Les moyens de serrage 5, 6 peuvent comprendre, outre la bride souple 5, des moyens de vissage 6 coopérant avec la bride souple 5 pour contraindre ledit collier 1 au serrage.

Tel qu'illustré à la figure 1, l'élément monobloc 9 du collier 1 permet ainsi d'encercler la canalisation de manière continue sur la quasi-totalité de la circonférence de la conduite 2, à l'exception d'une zone au niveau desdits moyens de vissage 6, en exerçant une force de serrage homogènement répartie sur la circonférence de la conduite 2, voire le cas échéant d'une discontinuité de contact, minime, « d » entre la selle 3 et la bride 5.

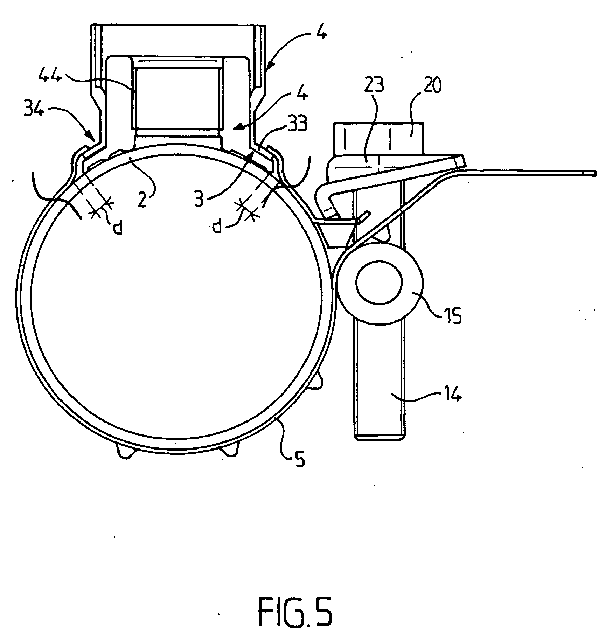

Cette discontinuité de contact « d », telle qu'illustrée à la figure 5 est inférieure ou égale à 5 mm.

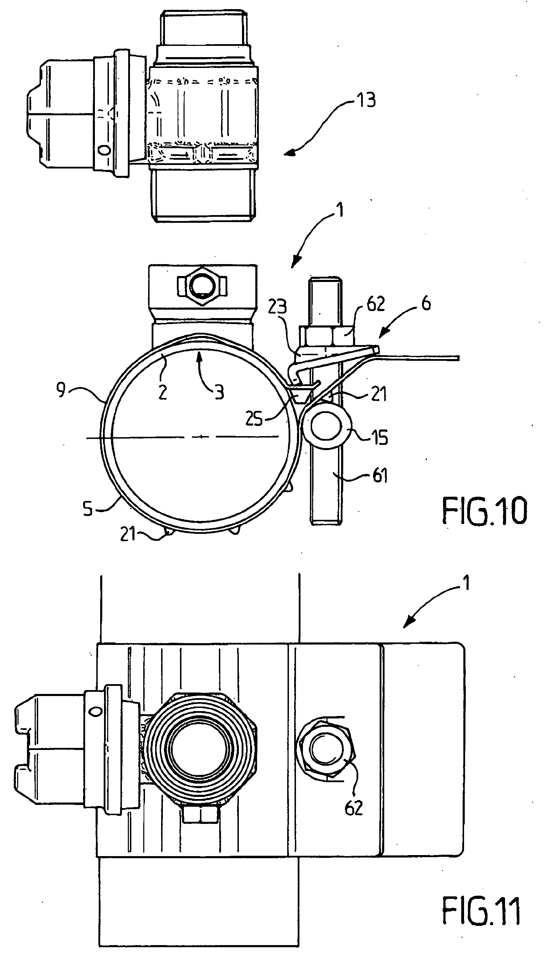

Les moyens de vissage 6 peuvent être constitués, selon un mode de réalisation par une vis 14 et un écrou 15 (figures 1 à 9) ou alternativement selon un autre mode de réalisation par une tige filetée 61 et deux écrous 15, 62 (figure 10).

Selon l'exemple des figures 1 à 4, la vis 14 est destinée à traverser deux ouvertures 16, 17 de la bride souple 5. Dans le cas où la selle 3 et la bride souple 5 constituent un élément monobloc, ces deux ouvertures 16, 17 sont situées sur l'élément 9 de part et d'autre de la selle 3.

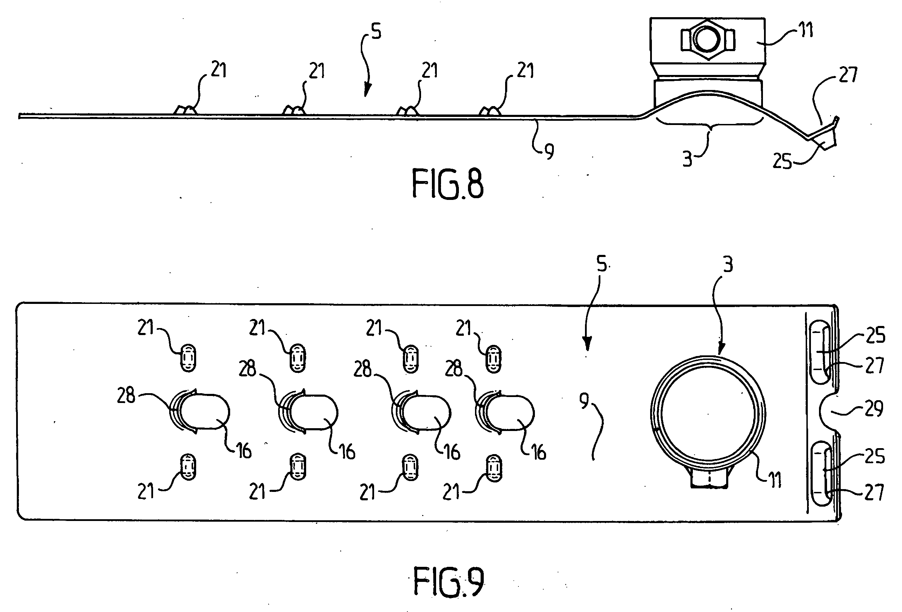

Selon un mode de réalisation, afin de pouvoir adapter le collier sur des canalisations de différents diamètres, la bride souple 5 peut présenter des moyens de réglage de la longueur effective de ladite bride souple. Ces moyens peuvent être constitués par une pluralité d'ouvertures de réglage 16 réparties sur la longueur de la bride souple 6 et destinées pour le réglage de la position des moyens de vissage 6. Selon un mode de réalisation (figure 9), ces ouvertures 16 peuvent présenter un bord recourbé 28 destiné à coopérer en butée avec la vis 14 (ou la tige filetée 61) lors du serrage.

Eventuellement, le bord recourbé 28 permet, lors du serrage de coopérer avec l'écrou 15, garantissant le bon positionnement de l'écrou 15 sur la bride souple 5.

En fonction du diamètre de la conduite, la vis 14 (ou la tige filetée 61) sera introduite dans l'ouverture 16 la plus adaptée au diamètre de la conduite.

Les ouvertures 16 et 17 peuvent notamment être oblongues, la direction des ouvertures oblongues orientées selon la longueur de la bride souple 5. En outre, afin d'éviter la rotation de l'écrou par rapport à la bride lors du vissage, la bride souple 5 peut présenter des butées 21, en saillie, destinées à engager avec l'écrou 15.

Telles qu'illustrées, ces butées 21 peuvent être constituées par des embossages de la feuille métallique constituant la bride 5.

L'écrou 15 peut être constitué d'une pièce cylindrique, l'axe du cylindre étant sensiblement orthogonal à l'axe de l'alésage taraudé de l'écrou 15.

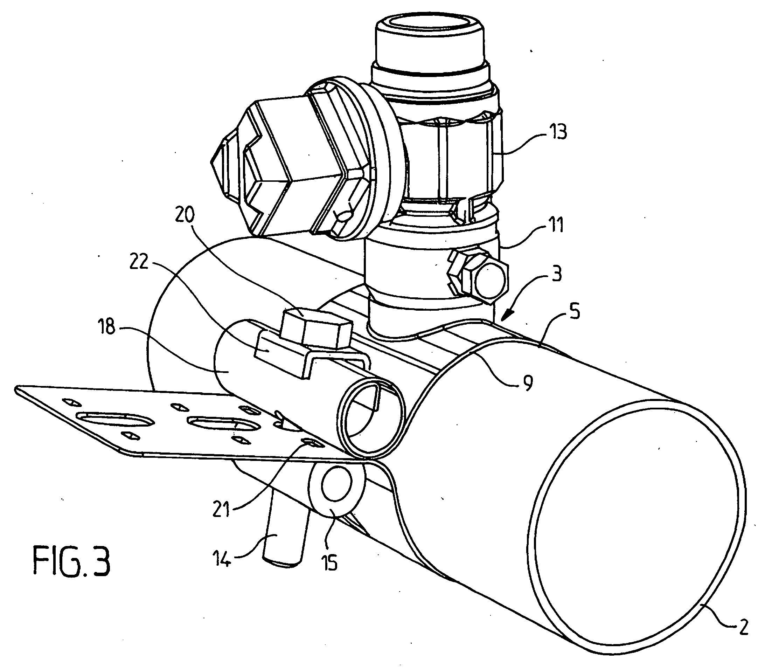

Cette pièce cylindrique est disposée, au montage, de manière transverse à la bride souple 5. Cet écrou 15 s'étend, tel qu'illustré à la figure 3 ou 7 sur la largeur de la bride souple 3 afin de permettre une bonne répartition des efforts. Pour chaque orifice 16 de la bride, au moins deux butées 21 peuvent être prévues pour coopérer en butée au niveau des deux extrémités du corps cylindrique de l'écrou 15.

Selon un mode de réalisation (figures 1 à 4), les moyens de serrage peuvent présenter un corps cylindrique 18 sur lequel est enroulée et assujettie une partie surabondante de la bride souple 5.

Ce corps cylindrique 18, notamment plastique, présente un alésage 19 traversé par les moyens de vissage et notamment la vis ou encore la tige filetée (non illustrée). Ce corps 18 est destiné à être pris entre l'écrou 15 et la tête 20 de la vis 14, ou encore entre les deux écrous 15, 62 (non illustré). Avantageusement cet alésage 19 peut laisser un jeu suffisamment important (voir figure 1) pour la vis 14 de telle sorte à autoriser certain débattement angulaire (d'axe de rotation coaxial au corps cylindrique 18) entre la vis 14 et le corps cylindrique 18. Cette disposition permet de limiter les pertes d'effort lors du vissage.

On notera la longueur des ouvertures oblongues 17 de la bride souple 5 sur la partie de bride destinée à être enroulée sur le corps cylindrique 18 afin que ces ouvertures 17 puissent être superposées et traversées simultanément par la vis 14 (figure 1).

Eventuellement afin d'éviter que la tête de vis 20 ne vienne frotter et endommager la partie de bande enroulée lors du vissage, un cavalier 22 peut être traversé par la vis 14, pris entre la tête de vis 20 et la partie de bride enroulée.

Avantageusement, lors du montage sur une conduite semi rigide, en particulier plastique, on peut choisir l'ouverture de réglage 16 de telle façon à obtenir la mise en butée de la vis 14 et de l'écrou 15 par l'intermédiaire du corps 18, permettant avantageusement de limiter les efforts de serrage sur la canalisation 2. Les ouvertures 16 de réglage de la bride souple 5 sont ainsi dimensionnées selon différents diamètres extérieurs standard de conduite semi-rigide, plastique, afin d'obtenir cette mise en butée.

Au contraire lors du montage sur une conduite rigide, en fonte notamment, on ne recherche pas une telle mise en butée

Selon un autre mode de réalisation (figures 7 à 9 et 10, 11), les moyens de serrage présentent un corps 23 présentant un alésage traversé par les moyens de vissage 6 et notamment la vis 14 (figure 5) ou la tige filetée 61 (figure 10). Le corps 23 est pris entre la tête de vis 20 et l'écrou 15 (figure 5) ou encore entre les deux écrous 15, 62 des moyens de vissage (figure 10). Ce corps 23 est notamment destiné à coopérer en butée avec la tête 20 de ladite vis 14 (figure 5) ou en butée avec l'écrou 62 (figure 10). Le corps 23 est muni de moyens d'accrochage 24 destinés à coopérer avec une zone de réception 25 de la bride souple 5 pour accrocher de manière amovible ladite bride souple 5.

Comme dans le mode de réalisation précédent, lors du montage, sur une conduite semi-rigide (plastique), la vis et l'écrou 15 (ou encore les écrous 15, 62) peuvent être mis en butée, par l'intermédiaire du corps 23 afin de limiter les efforts de serrage sur la canalisation.

Ce mode de réalisation permet de faciliter la pose en permettant d'ouvrir le collier, sans avoir à dévisser les moyens de vissage 6, notamment sans avoir à retirer la vis 14 de l'écrou 15, simplement en décrochant le corps 23 de la bride souple 5, puis en fermant le collier grâce auxdits moyens d'accrochage 24. Il suffit alors de serrer les moyens de vissage 6 dont la vis 14 (ou la tige filetée 61) aura été préalablement insérée dans l'ouverture de réglage 16 là plus adaptée au diamètre de la conduite 2.

Tels qu'illustrés selon les figures 7 à 9, les moyens d'accrochage 24 peuvent être constitués par des griffes 26 destinées à coopérer avec des cavités 27 de la bride souple 5, notamment au nombre de deux.

La bride souple 5 et la selle 3 sont, selon l'exemple de la figure 9, constituées par un élément monobloc sous la forme d'une bande obtenue à partir d'une feuille de matériau notamment métallique.

Les cavités 27 peuvent être réalisées par emboutissage de la feuille, de même que les butées 21, voire les alésages 16. Une échancrure 29 de passage de la vis 14 (ou de la tige filetée 61) peut être prévue à l'une des extrémités de la bride, positionnée entre les deux cavités 27.

L'élément monobloc 9, tel que précédemment décrit avec les butées 21, les ouvertures de réglage 16, voire l'ouverture 17, la selle 3 et la collerette 7 peuvent être obtenues à partir d'un feuillard métallique, notamment en acier inoxydable, à moindre coût par des opérations de formage, en particulier à partir des techniques d'emboutissage.

Telle qu'illustrée à la figure 2, la selle 3 peut être pré conformée suivant un rayon de courbure 30, moyen, afin d'épouser la conduite. Le raccord de branchement 11 peut, quant à lui, être fabriqué par les techniques de décolletage.

Alternativement selon un autre mode de réalisation non revendiqué, illustré à la figure 5, la selle 3 et la bride souple 5 peuvent être constituées par deux éléments distincts. La bride souple 5 peut être constituée essentiellement par une bande de matière, notamment métallique et, peut présenter une structure similaire à celle précédemment décrite. La bride souple 5 peut présenter une fenêtre circulaire 34 au travers de laquelle peut être insérée ladite selle 3. La selle 3 présente un épaulement 33, de faible épaisseur, destiné à être pincé entre le bord de la fenêtre 24 de la bride souple 5 et ladite conduite 2 lors du montage.

Les moyens de serrage peuvent être sensiblement identiques aux moyens décrits dans les exemples de réalisation précédents. Le joint 4 peut être le joint tubulaire tel précédemment décrit.

Le mode de réalisation des figures 10 et 11 se distingue des autres exemples illustrés en ce que les moyens de vissage sont constitués par une tige filetée 61 et deux écrous 15, 62.

L'un des écrous 15 peut être ledit écrou tel que précédemment décrit, constitué d'une pièce cylindrique, destiné lors du vissage à engager avec la bride souple 5 afin d'éviter la rotation entre cet écrou 5 et la bride souple 5.

Au contraire, l'autre écrou 62, notamment hexagonal, est destiné à coopérer avec un outil tel qu'une clef pour le vissage.

Avantageusement, cet écrou 62 peut être pourvu d'un frein (écrou connu sous l'appellation Nylstop).

Au début du vissage, la rotation de l'écrou 62 entraîne conjointement la rotation de la tige filetée. Le vissage s'effectue donc entre l'écrou (repéré 15) et la tige filetée 61. A partir d'un certain effort, les frottements entre la tige filetée 61 et la bride souple 5 engendre un couple résistant supérieur au couple de freinage du frein de l'écrou 62. Dès lors, le vissage se poursuit entre l'écrou 62 et la tige filetée 15.

Naturellement, d'autres modes de réalisation auraient pu être envisagés par l'homme du métier sans pour autant sortir du cadre de l'invention définie par les revendications ci-après.

## Revendications

1. Collier (1) de dérivation pour une canalisation de fluide (2) comprenant :
- une selle (3) destinée à être appliquée de manière étanche sur ladite canalisation, via un joint (4), présentant une ouverture (7) destinée à être disposée en regard d'un orifice de piquage de ladite canalisation,
- des moyens de serrage (5, 6) de la selle sur ladite canalisation comprenant au moins une bride souple (5) destinée à coopérer avec la selle pour ceinturer la canalisation,
- un raccord de branchement (11), tubulaire, selon une première alternative ou un robinet selon une seconde alternative,
dans lequel ladite selle (3) et ladite bride souple (5) sont agencées de telle sorte à ceinturer ledit collier (1) sur ladite canalisation (2), sans discontinuité de contact du collier (1) avec la circonférence de la canalisation entre ladite selle (3) et la bride souple (5), ou à tout le moins de limiter la discontinuité de contact (d) entre la selle (3) et la bride (25) inférieure ou égale à 5 mm,
**caractérisé en ce que** ladite selle (3) et la bride souple (5) sont constituées par un élément monobloc (9), souple, sous forme d'une bande, obtenu à partir d'une feuille de matériau, notamment métallique, la selle (3) réalisée à partir de la feuille de matériau, déformable étant destinée à épouser le rayon de courbure de ladite canalisation lors du serrage, ladite selle (3) permettant d'adapter son rayon de courbure en fonction du diamètre de la canalisation,
et **en ce que** ladite ouverture (7) de la selle (3) est définie par une collerette (10) de la feuille de matériau, circulaire, tournée vers l'extérieur du collier (1), ledit raccord de branchement (11), tubulaire, selon ladite première alternative ou encore directement ledit robinet, selon la seconde alternative, étant assujetti à ladite collerette (10), par soudure, sertissage ou collage selon la première alternative, ou soudure et sertissage selon la seconde alternative, le raccord de branchement (11), pièce rigide, présentant un bord circulaire introduit au jeu d'emboîtement près dans la collerette circulaire (10), assujetti par soudure ou sertissage ou collage à ladite collerette.

2. Collier selon la revendication 1, selon la première alternative, et dans lequel la feuille de matériau est métallique, ledit raccord de branchement (11) étant une pièce rigide métallique assujettie par soudure ou sertissage à ladite collerette (10)..

3. Collier selon la revendication 2, dans lequel le raccord de branchement (11) présente un taraudage (12) destiné pour le branchement par vissage d'un obturateur, ou d'un robinet de dérivation (13), ou encore d'une conduite de dérivation.

4. Collier selon l'une des revendications 1 à 3, multidiamètre, présentant des moyens de réglage de la longueur effective de ladite bride souple (5).

5. Collier selon l'une des revendications 1 à 4, dans lequel lesdits moyens de serrage comprennent, outre la bride souple (5), des moyens de vissage (6) coopérant avec la bride souple (5) pour contraindre ledit collier (1) au serrage.

6. Collier (1) selon la revendication 4 et 5, dans lequel lesdits moyens de réglage de la longueur effective de ladite bride souple comprennent une pluralité d'ouvertures de réglage (16) réparties sur la longueur de ladite bride souple (6) et destinées pour le réglage de la position des moyens de vissage (6).

7. Collier (1) selon la revendication 5 ou 6, dans lequel ladite bride souple (5) présente des butées (21) en saillie destinées à engager avec un écrou (15) des moyens de vissage (6) afin d'interdire la rotation dudit écrou (15) par rapport à ladite bride souple (6) lors du serrage par vissage, les butées (21) étant réalisées par des embossages de la bride souple (5).

8. Collier (1) selon la revendication 6 dans lequel les ouvertures de réglage (16) présentent chacune un bord recourbé (28) destiné à coopérer en butée avec la vis (14) lors du serrage.

9. Collier (1) selon l'une des revendications 5 à 8, dans lequel les moyens de serrage présentent, outre les moyens de vissage (6) un corps (23) présentant un alésage traversé par les moyens de vissage (6) muni de moyens d'accrochage (24), destinés à coopérer avec une zone de réception (25) de la bride souple (5) pour accrocher de manière amovible ladite bride souple (5).

10. Collier (1) selon l'une des revendications 5 à 8, dans lequel les moyens de serrage présentent un corps cylindrique (18) sur lequel est enroulée et assujettie une partie de ladite bride souple (5), présentant un alésage (19) traversé par lesdits moyens de vissage (6)

11. Collier selon l'une des revendications 1 à 10, dans lequel le joint (4) présente un corps tubulaire destiné à être introduit au jeu d'emboîtement prés dans l'ouverture (7) de ladite selle (3), présentant, une lèvre circulaire (41), de diamètre supérieur audit corps tubulaire, destinée à être pincée pour assurer l'étanchéité entre le siège (3) et ladite canalisation (2)

12. Collier selon la revendication 11, dans lequel le joint (4) présente un bord circulaire (42), à l'extrémité du corps tubulaire opposée à celle de la lèvre circulaire (41), permettant d'assurer l'étanchéité avec une pièce destinée à être vissée au raccord de branchement (11) selon ladite première alternative, ou encore d'assurer l'étanchéité avec le bord inférieur du robinet (13) selon la seconde alternative, lorsque le collier est en position de serrage sur la canalisation (2).

13. Collier (1) selon la revendication 11 ou 12, dans lequel le joint (4) présente sur le diamètre interne du corps tubulaire, un élément de renfort (44), rigide, notamment métallique, destiné à éviter que ledit joint (4) ne flambe lors du serrage.

14. Utilisation du collier de dérivation selon l'une des revendications 1 à 13 pour brancher une canalisation de dérivation sur une canalisation, en charge ou non.

## Patentansprüche

1. Abzweigschelle (1) einer fluidführenden Rohrleitung (2), umfassend:
- einen Sattel (3), der dazu bestimmt ist, über ein Verbindungsstück (4), das eine Öffnung (7) aufweist, die dazu bestimmt ist, gegenüber einer Anschlussmündung der Rohrleitung angeordnet zu werden, dicht auf der Rohrleitung angebracht zu werden,
- Mittel zum Festziehen (5, 6) des Sattels auf der Rohrleitung, umfassend mindestens eine flexible Lasche (5), die dazu bestimmt ist, mit dem Sattel zusammenzuwirken, um die Rohrleitung zu umgeben,
- einen röhrenförmigen Abzweigstutzen (11) gemäß einer ersten Alternative oder einen Hahn gemäß einer zweiten Alternative,
wobei der Sattel (3) und die flexible Lasche (5) derart angeordnet sind, dass sie die Schelle (1) auf der Rohrleitung (2) ohne Unterbrechung des Kontakts der Schelle (1) mit dem Umfang der Rohrleitung zwischen dem Sattel (3) und der flexiblen Lasche (5) umgeben oder dass sie mindestens die Unterbrechung des Kontakts (d) zwischen dem Sattel (3) und der Lasche (25) auf kleiner oder gleich 5 mm begrenzen,
**dadurch gekennzeichnet, dass** der Sattel (3) und die flexible Lasche (5) aus einem flexiblen, einstückigen Element (9) in Form eines Bands bestehen, das aus einer Bahn eines insbesondere metallischen Materials erhalten wird, wobei der aus der Bahn aus verformbarem Material gebildete Sattel (3) dazu bestimmt ist, sich an den Krümmungsradius der Rohrleitung beim Festziehen anzupassen, wobei es der Sattel (3) ermöglicht, seinen Krümmungsradius in Abhängigkeit vom Durchmesser der Rohrleitung anzupassen,
und dadurch, dass die Öffnung (7) des Sattels (3) durch einen kreisförmigen, zur Außenseite der Schelle (1) geneigten Flansch (10) aus der Materialbahn definiert ist, wobei gemäß der ersten Alternative der röhrenförmige Abzweigstutzen (11) oder gemäß der zweiten Alternative auch direkt der Hahn an dem Flansch (10) gemäß der ersten Alternative durch Schweißen, Crimpen oder Kleben oder gemäß der zweiten Alternative durch Schweißen und Crimpen befestigt ist, wobei der Abzweigstutzen (11), ein starres Teil, einen kreisförmigen Rand aufweist, der in den Muffenkelch nahe dem kreisförmigen Flansch (10) eingeführt ist, der durch Schweißen oder Crimpen oder Kleben an dem Flansch befestigt ist.

2. Schelle nach Anspruch 1 gemäß der ersten Alternative und wobei die Materialbahn metallisch ist, wobei der Abzweigstutzen (11) ein starres Metallteil ist, das durch Schweißen oder Crimpen an dem Flansch (10) befestigt ist.

3. Schelle nach Anspruch 2, wobei der Abzweigstutzen (11) ein Innengewinde (12) aufweist, das dazu bestimmt ist, durch Verschrauben ein Absperrorgan oder einen Umschalthahn (13) oder auch eine Abzweigleitung anzuschließen.

4. Mehrfachdurchmesser-Schelle nach einem der Ansprüche 1 bis 3, die Mittel zum Einstellen der effektive Länge der flexiblen Lasche (5) aufweist.

5. Schelle nach einem der Ansprüche 1 bis 4, wobei die Mittel zum Festziehen neben der flexiblen Lasche (5) Mittel zum Verschrauben (6) umfassen, die mit der flexiblen Lasche (5) zusammenwirken, um die Schelle (1) beim Festziehen zusammenzuziehen.

6. Schelle (1) nach Anspruch 4 und 5, wobei die Mittel zum Einstellen der effektiven Länge der flexiblen Lasche eine Vielzahl von Einstellungsöffnungen (16) umfassen, die über die Länge der flexiblen Lasche (6) verteilt sind und zum Einstellen der Position der Verschraubungsmittel (6) bestimmt sind.

7. Schelle (1) nach Anspruch 5 oder 6, wobei die flexible Lasche (5) vorspringende Anschläge (21) aufweist, die dazu bestimmt sind, in eine Mutter (15) der Verschraubungsmittel (6) einzugreifen, um die Drehung der Mutter (15) in Bezug auf die flexible Lasche (6) beim Festziehen durch Verschrauben zu verhindern, wobei die Anschläge (21) durch Prägungen der flexiblen Lasche (5) gebildet sind.

8. Schelle (1) nach Anspruch 6, wobei die Einstellungsöffnungen (16) jeweils einen gekrümmten Rand (28) aufweisen, der dazu bestimmt ist, im Anschlag mit der Schraube (14) beim Festziehen Crimpen zusammenzuwirken.

9. Schelle (1) nach einem der Ansprüche 5 bis 8, wobei die Mittel zum Festziehen neben den Verschraubungsmitteln (6) einen Körper (23) aufweisen, der eine Bohrung aufweist, durch die die Verschraubungsmittel (6) verlaufen, der mit Kopplungsmitteln (24) versehen ist, die dazu bestimmt sind, mit einem Aufnahmebereich (25) der flexiblen Lasche (5) zusammenzuwirken, um die flexible Lasche (5) lösbar zu koppeln.

10. Schelle (1) nach einem der Ansprüche 5 bis 8, wobei die Mittel zum Festziehen einen zylinderförmigen Körper (18) aufweisen, auf dem ein Teil der flexiblen Lasche (5) eingerollt und befestigt ist, der eine Bohrung (19) aufweist, durch die die Verschraubungsmittel (6) verlaufen.

11. Schelle nach einem der Ansprüche 1 bis 10, wobei das Verbindungsstück (4) einen röhrenförmigen Körper aufweist, der dazu bestimmt ist, in den Muffenkelch nahe der Öffnung (7) des Sattels (3) eingeführt zu werden, der eine kreisförmige Lippe (41) mit einem Durchmesser aufweist, der größer ist als der röhrenförmige Körper, die dazu bestimmt ist, eingeklemmt zu werden, um die Dichtheit zwischen dem Sitz (3) und der Rohrleitung (2) zu gewährleisten.

12. Schelle nach Anspruch 11, wobei das Verbindungsstück (4) einen kreisförmigen Rand (42) am Ende des röhrenförmigen Körpers gegenüber dem der kreisförmigen Lippe (41) aufweist, der es ermöglicht, die Dichtheit mit einem Teil zu gewährleisten, das dazu bestimmt ist, mit dem Abzweigstutzen (11) gemäß der ersten Alternative verschraubt zu werden oder auch um die Dichtheit mit dem unteren Rand des Hahns (13) gemäß der zweiten Alternative zu gewährleisten, wenn sich die Schelle in festgezogener Position auf der Rohrleitung (2) befindet.

13. Schelle (1) nach Anspruch 11 oder 12, wobei das Verbindungsstück (4) auf dem Innendurchmesser des röhrenförmigen Körpers ein starres, insbesondere metallisches Verstärkungselement (44) aufweist, das dazu bestimmt ist, zu verhindern, dass das Verbindungsstück (4) während des Festziehens knickt.

14. Verwendung der Abzweigungsschelle nach einem der Ansprüche 1 bis 13, um eine Abzweigrohrleitung an eine Rohrleitung, mit oder ohne Last, anzuschließen.

## Claims

1. Tapping collar (1) for tapping off a fluid-carrying pipe (2), comprising:
- a saddle (3) intended to be pressed in a fluid-tight manner against said pipe, via a gasket (4) that has an opening (7) intended to be positioned facing a tapping made in said pipe,
- clamping means (5, 6) for clamping the saddle onto said pipe and comprising at least one flexible clamp (5) intended to engage with the saddle to encircle the pipe,
- a tubular connector (11), according to a first alternative or a tap according to a second alternative,
wherein said saddle (3) and said flexible clamp (5) are arranged in such a way as to encircle said collar (1) on said pipe (2), with no discontinuity in the contact between the collar (1) and the circumference of the pipe between said saddle (3) and the flexible clamp (5), or at the very least with only limited discontinuity in the contact (d) between the saddle (3) and the clamp (25) of less than or equal to 5 mm,
**characterised in that** said saddle (3) and the flexible clamp (5) are formed by a single-unit, flexible element (9), in the form of a strip, obtained from a sheet of material, in particular metallic, the saddle (3) made from the sheet of material, that is deformable, being intended to engage with the radius of curvature of said pipe during clamping, said saddle (3) allowing its radius of curvature to be adapted to suit the diameter of the pipe,
and **in that** said opening (7) of the saddle (3) is defined by a flange (10) of the sheet of material, that is circular, turned towards the outside of the collar (1), said tubular connector (11) according to said first alternative or even directly said tap, according to the second alternative, being fixed to said flange (10), by welding, crimping or bonding according to the first alternative, or by welding and crimping according to the second alternative, the connector (11), being a rigid part, having a circular edge inserted, within the interlocking clearance, into the circular flange (10), fixed by welding, crimping or bonding to said flange.

2. Collar according to claim 1, according to the first alternative, and wherein the sheet of material is metallic, said connector (11) being a rigid metallic part fixed by welding or crimping to said flange (10).

3. Collar according to claim 2, wherein the connector (11) has a thread (12) intended for the connection, by screwing, of a closure member, or a bypass valve (13), or even a bypass line.

4. Collar according to one of claims 1 to 3, multidiameter, having adjustment means for adjusting the effective length of said flexible clamp (5).

5. Collar according to one of claims 1 to 4, wherein said clamping means comprise, further to the flexible clamp (5), screwing means (6) engaging with the flexible clamp (5) for stressing said collar (1) during clamping.

6. Collar (1) according to claims 4 and 5, wherein said adjustment means for adjusting the effective length of said flexible clamp comprise a plurality of adjustment openings (16) distributed over the length of said flexible clamp (6) and intended to adjust the position of the screwing means (6).

7. Collar (1) according to claim 5 or 6, wherein said flexible clamp (5) has protruding abutments (21) intended to engage with a nut (15) of the screwing means (6) in order to prevent said nut (15) from rotating in relation to said flexible clamp (6) during clamping by screwing, the abutments (21) being made from embossings of the flexible clamp (5).

8. Collar (1) according to claim 6, wherein the adjustment openings (16) each have a curved edge (28) intended to engage via abutment with the screw (14) during clamping.

9. Collar (1) according to one of claims 5 to 8, wherein the clamping means have, further to the screwing means (6), a body (23) having a bore passed through by the screwing means (6) equipped with gripping means (24), intended to engage with a receiving area (25) of the flexible clamp (5) for gripping said flexible clamp (5) in a removable manner.

10. Collar (1) according to one of claims 5 to 8, wherein the clamping means have a cylindrical body (18) on which a portion of said flexible clamp (5) is wound and fixed, having a bore (19) passed through by said screwing means (6).

11. Collar according to one of claims 1 to 10, wherein the gasket (4) has a tubular body intended to be inserted, within the interlocking clearance, into the opening (7) of said saddle (3), having a circular lip (41), with a diameter exceeding that of said tubular body, intended to be clamped to guarantee the fluid-tight seal between the saddle (3) and said pipe (2).

12. Collar according to claim 11, wherein the gasket (4) has a circular edge (42), at the end of the tubular body facing that of the circular lip (41), producing the fluid-tight seal with a part intended to be screwed to the connector (11) according to said first alternative, or even producing the fluid-tight seal with the lower edge of the tap (13) according to the second alternative, when the collar is in the clamping position on the pipe (2).

13. Collar (1) according to claim 11 or 12, wherein the gasket (4) has, on the inner diameter of the tubular body, a rigid reinforcing element (44), in particular made from metal, intended to prevent said gasket (4) from buckling during clamping.

14. Use of the tapping collar according to one of claims 1 to 13 to connect a bypass pipe to a pipe, regardless of whether the latter is pressured or not.
